# EUROPÄISCHE PATENTSCHRIFT

(11) **EP 2 002 601 B1**
(45) Veröffentlichungstag und Bekanntmachung des Hinweises auf die Patenterteilung: **09.09.2009**
(21) Anmeldenummer: 07727201.1
(22) Anmeldetag: 22.03.2007
(51) Int. Cl.: H04L 12/24

(54) **AUFFINDEN VON UNIDIREKTIONALEN HANDOVER-BEZIEHUNGEN**
LOCATION OF UNIDIRECTIONAL HANDOVER RELATIONSHIPS
DETECTION DE RELATIONS UNIDIRECTIONNELLES DE TRANSFERT INTERCELLULAIRE (HANDOVER)

(30) Priorität: 28.03.2006 DE 102006014357
(43) Veröffentlichungstag der Anmeldung: 17.12.2008
(73) Patentinhaber: Nokia Siemens Networks GmbH & Co. KG, 81541 München (DE)
(72) Erfinder: GOERGE, Jürgen, 82061 Neuried (DE); POLLAKOWSKI, Olaf, 10629 Berlin (DE)
(86) Internationale Anmeldenummer: PCT/EP2007/052725
(87) Internationale Veröffentlichungsnummer: WO 2007/110360

(56) Entgegenhaltungen:
- DE-A1- 10 337 450
- DE-A1- 19 740 713
- DE-A1- 19 813 754

## Beschreibung

Die Erfindung betrifft ein Verfahren zum Betreiben eines Managementsystems, bei welchem eine erste Managementeinrichtung Informationen betreffend von der ersten Managementeinrichtung überwachte Objekte, betreffend von einer zweiten Managementeinrichtung überwachte Objekte, und betreffend Beziehungen zwischen von der ersten Managementeinrichtung überwachten Objekten und von der zweiten Managementeinrichtung überwachten Objekten speichert.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, z.B. sogenannte "notifications'", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Basisstationen eines WiMAX Systems, oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der nächstkommende Stand der Technik wird durch DE 103 37 450 A1 repräsentiert. Diese Patentschrift ist auf ein Verfahren zur Behandlung von Parameteränderungen in einem objektorientierten Netzwerkmanagementsystem eines zellularen Mobilfunknetzes gerichtet und offenbart, dass eine erste Managementeinrichtung NMC Informationen betreffend von der von ihr überwachten Objekte Funkzellen, betreffend von einer zweiten Managementeinrichtung OMC überwachter Objekte Funkzellen, und betreffend Querbeziehungen zwischen vom NMC und vom OMC überwachter Funkzellen speichert, sowie vom OMC gespeicherte Informationen betreffend vom NMC und OMC überwachter Funkzellen und betreffend Querbeziehungen zwischen der vom NMC und OMC überwachter Funkzellen abfragen kann.

Der Erfindung liegt die Aufgabe zugrunde, ein effizientes Verfahren zum Betreiben eines Managementsystems, sowie Vorrichtungen zur Durchführung des Verfahrens aufzuzeigen.

Diese Aufgabe wird durch ein Verfahren mit den Merkmalen des Anspruchs 1, sowie durch eine Managementeinrichtung und ein Managementsystem mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines Managementsystems speichert eine erste Managementeinrichtung Informationen betreffend von der ersten Managementeinrichtung überwachte Objekte, betreffend von einer zweiten Managementeinrichtung überwachte Objekte, und betreffend Beziehungen zwischen von der ersten Managementeinrichtung überwachten Objekten und von der zweiten Managementeinrichtung überwachten Objekten. Die erste Managementeinrichtung fragt von der zweiten Managementeinrichtung gespeicherte Informationen betreffend von der ersten Managementeinrichtung überwachte Objekte, betreffend von der zweiten Managementeinrichtung überwachte Objekte, und betreffend Beziehungen zwischen von der ersten Managementeinrichtung überwachten Objekten und von der zweiten Managementeinrichtung überwachten Objekten ab. Unter Verwendung der von der ersten Managementeinrichtung gespeicherten und der von der zweiten Managementeinrichtung abgefragten Informationen ermittelt die erste Managementeinrichtung zumindest eine Beziehung zwischen zumindest einem von der ersten Managementeinrichtung überwachten Objekt und zumindest einem von der zweiten Managementeinrichtung überwachten Objekt, wobei diese Beziehung entweder lediglich von der ersten Managementeinrichtung oder lediglich von der zweiten Managementeinrichtung gespeichert ist.

Die beiden Managementeinrichtungen überwachen jeweils Objekte. Eine ein Objekt überwachende Managementeinrichtung kann auf das jeweilige Objekt zugreifen, kann Operationen in Bezug auf dieses Objekt starten, und empfängt Meldungen von dem überwachten Objekt. Die Managementeinrichtungen speichern jeweils Informationen über von ihnen überwachte Objekte. Weiterhin liegen den Managementeinrichtungen Informationen betreffend von der jeweils anderen Managementeinrichtung überwachte Objekte vor. Auf diese so genannten externen Objekte kann die jeweilige Managementeinrichtung nur lesend zugreifen. Die Informationen, welche ihr vorliegen, sind lediglich Kopien der Informationen, welche der das Objekt überwachenden Managementeinrichtung vorliegen oder zu einem früheren Zeitpunkt vorlagen. Die erste Managementeinrichtung kann hierbei Informationen über alle oder lediglich über eine oder manche der von der zweiten Managementeinrichtung überwachten Objekte speichern. Entsprechendes gilt auch für die zweite Managementeinrichtung.

Es ist möglich, dass in Bezug auf ein bestimmtes Objekt die beiden Managementeinrichtungen unterschiedliche Informationen gespeichert haben. Insbesondere können die Informationen, welche eine Managementeinrichtung in Bezug auf ein von der anderen Managementeinrichtung überwachtes Objekt speichert, eine Teilmenge der von der anderen das Objekt überwachenden Managementeinrichtung gespeicherten Informationen darstellen.

Objekte, welche von verschiedenen Managementeinrichtungen überwacht werden, können gemäß den den Managementeinrichtungen vorliegenden Informationen eine Beziehung zueinander aufweisen. Die Speicherung von derartigen Beziehungen ist sinnvoll, denn oftmals beeinflussen sich von verschiedenen Managementeinrichtungen überwachte Objekte gegenseitig. Durch einen Vergleich von der ersten Managementeinrichtung vorliegenden Informationen mit der zweiten Managementeinrichtung vorliegenden Informationen ermittelt die erste Managementeinrichtung bestimmte Arten von Beziehungen. Hierbei handelt es sich um Beziehungen, welche entweder von der ersten Managementeinrichtung und nicht von der zweiten Managementeinrichtung gespeichert sind, oder welche von der zweiten und nicht von der ersten Managementeinrichtung gespeichert sind. Die Bedingung, dass die von der ersten Managementeinrichtung gesuchten Beziehungen entweder lediglich von der ersten oder lediglich von der zweiten Managementeinrichtung gespeichert sind, bedeutet somit, dass genau eine der beiden Managementeinrichtungen Kenntnis von dieser Beziehung hat. Ob gegebenenfalls weitere Managementeinrichtungen außer der ersten und der zweiten Managementeinrichtung diese Beziehung kennt, ist hierbei nicht relevant.

Das Abfragen der von der zweiten Managementeinrichtung gespeicherten Informationen durch die erste Managementeinrichtung kann auf verschiedene Weisen erfolgen. Bei einem Pull-Mechanismus z.B. werden die Informationen von der ersten Managementeinrichtung aktiv von der zweiten Managementeinrichtung abgefragt. Bei einem Push-Mechanismus hingegen stellt die zweite Managementeinrichtung die Informationen zur Verfügung, und die erste Managementeinrichtung fragt diese zur Verfügung gestellten Informationen ab bzw. empfängt diese. Hierfür kann ein Verfahren verwendet werden, mittels welchem die zweite Managementeinrichtung die von ihr gespeicherten Informationen "publiziert", wonach die erste Managementeinrichtung die publizierten Informationen abfragt oder empfängt.

In Weiterbildung der Erfindung führt die erste Managementeinrichtung in Bezug auf zumindest eine ermittelte Beziehung, welche lediglich von der zweiten Managementeinrichtung gespeichert ist, Änderungen der von der ersten Managementeinrichtung gespeicherten Informationen durch, so dass diese Beziehung auch von der ersten Managementeinrichtung gespeichert ist. In diesem Fall reagiert nur die erste Managementeinrichtung auf die Ermittlung bzw. das Auffinden der Beziehung, indem eine Änderung ihrer gespeicherten Informationen durchgeführt wird. In Bezug auf diese Beziehung wird hierdurch eine Symmetrie zwischen den Informationen der ersten und der zweiten Managementeinrichtung hergestellt.

Einer anderen Weiterbildung der Erfindung gemäß sendet die erste Managementeinrichtung eine Nachricht zur Information über zumindest eine Beziehung, welche lediglich von der ersten Managementeinrichtung gespeichert ist, an die zweite Managementeinrichtung. Diese Nachricht umfasst vorzugsweise Identifikationsinformationen betreffend ein von der ersten Managementeinrichtung überwachtes Objekt und Identifikationsinformationen betreffend ein von der zweiten Managementeinrichtung überwachtes Objekt. Die Nachricht kann sich auf mehrere von der ersten Managementeinrichtung ermittelte Beziehungen beziehen und somit mehr als zwei Objekte angeben. Es ist möglich, dass die Nachricht sich auf ein von der ersten Managementeinrichtung überwachtes Objekt bezieht, welches der zweiten Managementeinrichtung unbekannt ist. Letzteres bedeutet, dass die zweite Managementeinrichtung keine Informationen über dieses Objekt gespeichert hat. In diesem Fall ist es vorteilhaft, wenn die Nachricht von der zweiten Managementeinrichtung zu speichernde Informationen betreffend dieses ihr bislang unbekannte Objekt beinhaltet.

Mit Vorzug führt die zweite Managementeinrichtung eine Änderung der von der zweiten Managementeinrichtung gespeicherten Informationen durch, so dass die Beziehung, über welche die Nachricht informiert, auch von der zweiten Managementeinrichtung gespeichert ist. In diesem Fall reagiert nicht nur die erste Managementeinrichtung auf die Ermittlung bzw. das Auffinden der Beziehung, sondern die zweite Managementeinrichtung reagiert auf den Empfang der Nachricht von der ersten Managementeinrichtung, indem eine Änderung ihrer gespeicherten Informationen durchgeführt wird. In Bezug auf diese Beziehung wird hierdurch eine Symmetrie zwischen den Informationen der ersten und der zweiten Managementeinrichtung hergestellt.

Einer Ausgestaltung der Erfindung gemäß führt die erste Managementeinrichtung in Bezug auf zumindest eine ermittelte Beziehung, welche lediglich von der ersten Managementeinrichtung gespeichert ist, Änderungen der von der zweiten Managementeinrichtung gespeicherten Informationen durch, so dass diese Beziehung auch von der zweiten Managementeinrichtung gespeichert ist. Hierzu ist es nötig, dass die erste Managementeinrichtung einen Zugriff auf den Speicher der zweiten Managementeinrichtung hat.

Besonders vorteilhaft ist es, wenn die Kommunikation zwischen der ersten Managementeinrichtung und der zweiten Managementeinrichtung über eine Peer-to-Peer Schnittstelle erfolgt. Derartige Schnittstellen werden beschrieben z.B. in Tele Management Forum TMF-058.

Mit Vorzug umfassen die von der ersten Managementeinrichtung und von der zweiten Managementeinrichtung gespeicherten Informationen betreffend überwachte Objekte Werte von Attributen der jeweiligen Objekte.

In Ausgestaltung der Erfindung handelt es sich bei den Objekten um Funkzellen eines Mobilfunkkommunikationssystems und bei den Beziehungen zwischen den Objekten um Handover-Beziehungen. Eine Handover-Beziehung gibt hierbei an, dass ein Handover, d.h. ein Wechsel einer Teilnehmerstation von einer Funkzelle in eine andere Funkzelle, möglich ist. Neben den Informationen betreffend die Funkzellen können die erste und die zweite Managementeinrichtung auch Informationen betreffend andere Objekte speichern.

Vorzugsweise handelt es sich bei der ersten und der zweiten Managementeinrichtung um gleichartige Managementeinrichtungen, wie z.B. um Element Manager eines Mobilfunkkommunikationssystems. Diese befinden sich auf der gleichen Hierarchieebene des Managementsystems. Hierbei müssen die beiden Managementeinrichtungen nicht vom gleichen Hersteller sein. Vorzugsweise bezieht sich die Gleichartigkeit auf eine Peer-to-Peer Kommunikation zwischen den beiden Managementeinrichtungen, in diesem Fall bedeutete Gleichartigkeit, dass es sich bei den beiden Managementeinrichtungen um "Peers" handelt.

Die erfindungsgemäße Managementeinrichtung umfasst Mittel zum Speichern von Informationen betreffend von der Managementeinrichtung überwachte Objekte, betreffend von einer zweiten Managementeinrichtung überwachte Objekte, und betreffend Beziehungen zwischen von der Managementeinrichtung überwachten Objekten und von der zweiten Managementeinrichtung überwachten Objekten; sowie Mittel zum Abfragen von von der zweiten Managementeinrichtung gespeicherten Informationen betreffend von der Managementeinrichtung überwachte Objekte, betreffend von der zweiten Managementeinrichtung überwachte Objekte, und betreffend Beziehungen zwischen von der Managementeinrichtung überwachten Objekten und von der zweiten Managementeinrichtung überwachten Objekten. Ferner sind Mittel vorhanden zum Ermitteln von zumindest einer Beziehung zwischen zumindest einem von der Managementeinrichtung überwachten Objekt und zumindest einem von der zweiten Managementeinrichtung überwachten Objekt, welche entweder lediglich von der Managementeinrichtung oder lediglich von der zweiten Managementeinrichtung gespeichert ist, unter Verwendung der von der Managementeinrichtung gespeicherten und der von der zweiten Managementeinrichtung abgefragten Informationen.

Das erfindungsgemäße Managementsystem umfasst eine erste Managementeinrichtung, eine zweite Managementeinrichtung, sowie von der ersten Managementeinrichtung überwachte Objekte und von der zweiten Managementeinrichtung überwachte Objekte. Es sind Mittel der ersten Managementeinrichtung vorhanden zum Speichern von Informationen betreffend von der ersten Managementeinrichtung überwachte Objekte, betreffend von einer zweiten Managementeinrichtung überwachte Objekte, und betreffend Beziehungen zwischen von der ersten Managementeinrichtung überwachten Objekten und von der zweiten Managementeinrichtung überwachten Objekten. Auch bei der zweiten Managementeinrichtung sind Mittel vorhanden zum Speichern von Informationen betreffend von der ersten Managementeinrichtung überwachte Objekte, betreffend von der zweiten Managementeinrichtung überwachte Objekte, und betreffend Beziehungen zwischen von der ersten Managementeinrichtung überwachten Objekten und von der zweiten Managementeinrichtung überwachten Objekten. Die erste Managementeinrichtung umfasst ferner Mittel zum Abfragen von von der zweiten Managementeinrichtung gespeicherten Informationen betreffend von der ersten Managementeinrichtung überwachte Objekte, betreffend von der zweiten Managementeinrichtung überwachte Objekte, und betreffend Beziehungen zwischen von der ersten Managementeinrichtung überwachten Objekten und von der zweiten Managementeinrichtung überwachten Objekten, sowie Mittel zum Ermitteln von zumindest einer Beziehung zwischen zumindest einem von der ersten Managementeinrichtung überwachten Objekt und zumindest einem von der zweiten Managementeinrichtung überwachten Objekt, welche entweder lediglich von der ersten Managementeinrichtung oder lediglich von der zweiten Managementeinrichtung gespeichert ist, unter Verwendung der von der ersten Managementeinrichtung gespeicherten und der von der zweiten Managementeinrichtung abgefragten Informationen.

Die erfindungsgemäße Managementeinrichtung und das erfindungsgemäße Managementsystem eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Mobilfunkkommunikationssystem,
- Figur 2:: einen Ablauf einer Kommunikation zwischen zwei Managementeinrichtungen.

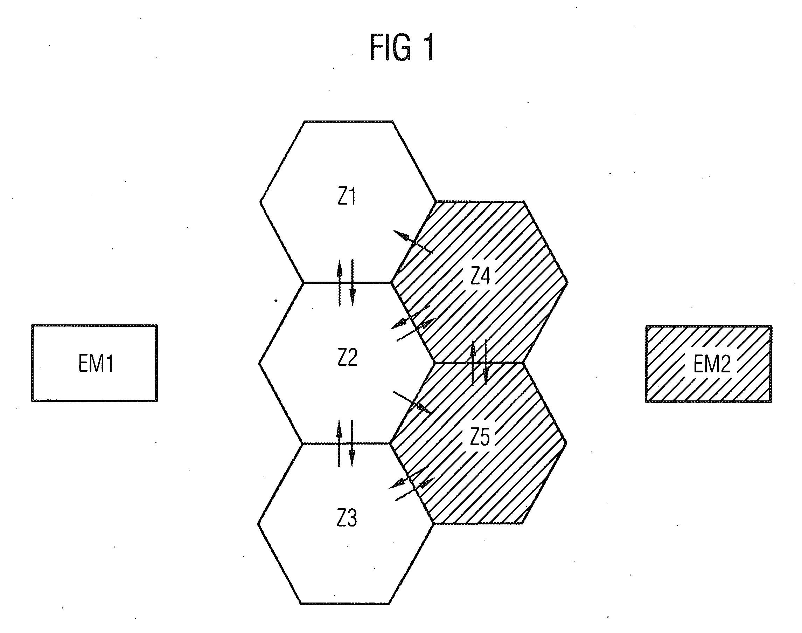

Der in Figur 1 dargestellte Ausschnitt aus einem zellularen Mobilfunkkommunikationssystem umfasst die Funkzellen Z1, Z2, Z3, Z4 und Z5, sowie die beiden Managementeinrichtungen EM1 und EM2 (EM: Element Manager). Die Managementeinrichtung EM1 ist für die Überwachung der Funkzellen Z1, Z2 und Z3 zuständig, die Managementeinrichtung EM2 für die Funkzellen Z4 und Z5. Bei den Funkzellen Z1, Z2, Z3, Z4 und Z5 handelt es sich aus Sicht der Managementeinrichtungen EM1 und EM2 um gemanagte Objekte, für deren Überwachung sie zuständig sind. Die Funkzellen Z1, Z2, Z3, Z4 und Z5 sind jeweils einer Objektklassen zugeordnet und repräsentieren jeweils eine bestimmte Objektinstanz ihrer jeweiligen Objektklasse.

Die Managementeinrichtung EM1 speichert Informationen in Form von Werten von Attributen betreffend ihre eigenen Funkzellen Z1, Z2 und Z3 als Master-Objekte, während die Managementeinrichtung EM2 Informationen in Form von Werten von Attributen betreffend ihre eigenen Funkzellen Z4 und Z5 als Master-Objekte speichert. Weiterhin können die Managementeinrichtungen EM1 und EM2 Informationen in Form von Werten von Attributen der Funkzellen der jeweils anderen Managementeinrichtung EM1 bzw. EM2 als externe Objekte speichern. Ein externes Objekt bedeutet, dass die jeweilige Managementeinrichtung nicht für die Überwachung dieses Objektes zuständig ist, somit z.B. keine Operationen an das jeweilige Objekt senden kann und keine Änderung von Attributen in Bezug auf das jeweilige Objekt anordnen kann. Bei den Informationen, welche betreffend ein externes Objekt gespeichert werden, handelt es lediglich um eine Kopie der Daten des zugehörigen Master-Objektes.

Neben den Informationen betreffend die Funkzellen Z1, Z2, Z3, Z4 und Z5 speichern die Managementeinrichtungen EM1 und EM2 auch Nachbarschafts-Beziehungen (englisch: adjacencies) zwischen den Funkzellen Z1, Z2, Z3, Z4 und Z5. Dies ist dadurch motiviert, dass Handover, d.h. Wechsel einer teilnehmerseitigen Funkstation von einer Funkzelle in eine benachbarte Funkzelle, möglich sein sollen. Ist in Bezug auf eine bestimmte Funkzelle eine solche Handoverbeziehung zu einer anderen Funkzelle gespeichert, so bedeutet dies, dass ein Handover von dieser Funkzelle in die andere Funkzelle möglich ist. Dies ist in Figur 1 als aus einer Funkzelle austretender Pfeil symbolisiert..

Betrachtet man zwei benachbarte Funkzellen, so liegt üblicherweise eine bidirektionale Handoverbeziehung vor. D.h. es ist sowohl möglich, dass ein Handover von der ersten zu der zweiten der beiden Funkzellen durchgeführt wird, als auch, dass ein Handover von der zweiten zu der ersten der beiden Funkzellen durchgeführt wird. Unidirektionale Handoverbeziehungen hingegen, d.h. die Situation, dass ein Handover nur von der ersten zu der zweiten, nicht aber von der zweiten zu der ersten der beiden Funkzellen möglich ist, werden in der Regel nicht verwendet. Im folgenden wird davon ausgegangen, dass zwischen jeweils benachbarten Funkzellen der Figur 1, d.h. zwischen den Funkzellen Z1 und Z2, Z1 und Z4, Z2 und Z4, Z2 und Z3, Z2 und Z5, Z3 und Z5, sowie Z4 und Z5 jeweils eine bidirektionale Handoverbeziehung besteht.

Gemäß der oben erläuterten Bedeutung der Pfeile zwischen den Funkzellen Z1, Z2, Z3, Z4 und Z5 hat die Managementeinrichtung EM1 in Bezug auf ihre eigenen Funkzellen Z1, Z2 und Z3 jeweils bidirektionale Handoverbeziehungen gespeichert. Dies ist an den doppelten Pfeilen zwischen den Funkzellen Z1 und Z2, sowie Z2 und Z3 zu erkennen. Selbiges gilt auch für die eigenen Funkzellen Z4 und Z5 der Managementeinrichtung EM2. Betrachtet man benachbarte Funkzellen, welche von unterschiedlichen Managementeinrichtungen EM1 und EM2 überwacht werden, so ist in Bezug auf die Funkzellen Z2 und Z4 eine bidirektionale Handoverbeziehung gespeichert, d.h. gemäß den von der Managementeinrichtung EM1 gespeicherten Handoverbeziehungen ist ein Handover von ihrer Master-Funkzelle Z2 zu der externen Funkzelle Z4 möglich, und gemäß den von der Managementeinrichtung EM2 gespeicherten Handoverbeziehungen ist ein Handover von ihrer Master-Funkzelle Z4 zu der externen Funkzelle Z2 möglich. Entsprechendes gilt auch für die benachbarten Funkzellen Z3 und Z5. In Bezug auf die benachbarten Funkzellen Z1 und Z4 jedoch ist lediglich eine unidirektional Handoverbeziehung gespeichert, denn die Managementeinrichtung EM2 hat zwar gespeichert, dass ein Handover von ihrer Master-Funkzelle Z4 zu der externen Funkzelle Z1 möglich ist, die Managementeinrichtung EM1 hat jedoch nicht gespeichert, dass ein Handover von ihrer Master-Funkzelle Z1 zu der externen Funkzelle Z4 möglich ist. Ähnliches gilt für die benachbarten Funkzellen Z2 und Z5: die Managementeinrichtung EM1 hat zwar gespeichert, dass ein Handover von ihrer Master-Funkzelle Z2 zu der externen Funkzelle Z5 möglich ist, die Managementeinrichtung EM2 hat jedoch nicht gespeichert, dass ein Handover von ihrer Master-Funkzelle Z5 zu der externen Funkzelle Z2 möglich ist.

Das Vorhandensein von unidirektionalen Handoverbeziehungen entspricht einer Inkonsistenz in den Daten des Managementsystems. Eine Auffinden und Entfernen dieser unidirektionalen Handoverbeziehungen steigert daher die Performance des Mobilfunkkommunikationssystems. Innerhalb der von einer einzigen Managementeinrichtung überwachten Gruppe von Funkzellen ist es leicht, unidirektionale Handoverbeziehungen aufzuspüren und in bidirektionale Handoverbeziehungen umzuwandeln. Werden Funkzellen hingegen von verschiedenen Managementeinrichtungen überwacht, so wie in Figur 1 dargestellt, muss gemäß dem Stand der Technik eine zentrale Einrichtung eingesetzt werden, welche die Datensätze der verschiedenen Managementeinrichtungen abfragt und vergleicht. Hierfür kann ein NMC (Network Management Center) eingesetzt werden, welches mit den verschiedenen Managementeinrichtungen über eine Manager-Agent-Schnittstelle verbunden ist.

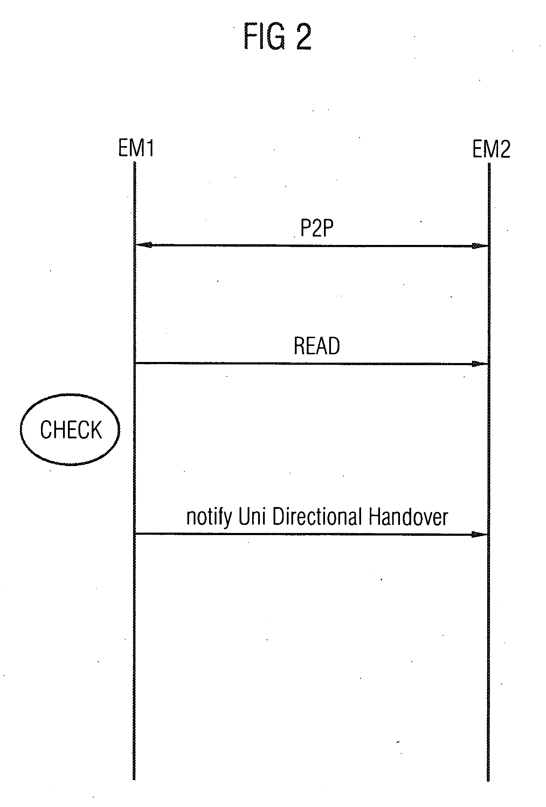

Figur 2 zeigt den Ablauf eines Verfahrens, bei welchem die Managementeinrichtungen EM1 und EM2 über eine Peer-to-Peer Schnittstelle P2P miteinander kommunizieren. Zu Beginn fragt die Managementeinrichtung EM1 im Verfahrensschritt READ von der Managementeinrichtung EM2 ab, welche Funkzellen die Managementeinrichtung EM2 als Master-Objekte, welche Funkzellen die Managementeinrichtung EM2 als externe Objekte, und welche Handoverbeziehungen die Managementeinrichtung EM2 zwischen diesen Funkzellen gespeichert hat. Für diese Abfrage wird vorzugsweise die Upload-Operation des Bulk CM IRP verwendet, beschrieben in den Standardspezifikationen 3GPP TS 32.611, 32.612, 32.613, 32.614, 32.615.

Im darauf folgenden Verfahrensschritt CHECK erfolgt eine Überprüfung durch die Managementeinrichtung EM1 daraufhin, ob unidirektionale Handoverbeziehungen vorliegen. Hierfür werden in Bezug auf die von der Managementeinrichtung EM2 gespeicherten Handoverbeziehungen ausschließlich Handoverbeziehungen zwischen Funkzellen der Managementeinrichtung EM1 und der Managementeinrichtung EM2 betrachtet. Gegebenenfalls von der Managementeinrichtung EM2 gespeicherte Handoverbeziehungen zwischen Funkzellen der Managementeinrichtung EM2 und einer anderen Managementeinrichtung als der Managementeinrichtung EM1, sowie zwischen Funkzellen der Managementeinrichtung EM1 und einer anderen Managementeinrichtung als der Managementeinrichtung EM2 werden hierbei ignoriert.

Bei einem Vergleich der von der Managementeinrichtung EM1 gespeicherten und der von der Managementeinrichtung EM2 gespeicherten Handoverbeziehungen zwischen Funkzellen der Managementeinrichtung EM1 und der Managementeinrichtung EM2 stellt die Managementeinrichtung EM1 fest, dass zwischen den Funkzellen Z1 und Z4, sowie zwischen den Funkzellen Z2 und Z5 jeweils eine unidirektionale Handoverbeziehung vorhanden ist. Diese wird im folgenden behoben, indem eine bidirektionale Handoverbeziehung erzeugt wird.

In Bezug auf die benachbarten Funkzellen Z1 und Z4 stellt die Managementeinrichtung EM1 fest, dass gemäß den Handoverbeziehungen der Managementeinrichtung EM2 ein Handover von der Funkzelle Z4 zu der Funkzelle Z1 möglich ist, während der umgekehrte Handover von der Funkzelle Z1 zu der Funkzelle Z4 gemäß ihren eigenen Handoverbeziehungen nicht durchführbar ist. Um dies zu beheben, ergänzt die Managementeinrichtung EM1 ihre eigenen Handoverbeziehungen, so dass nunmehr gemäß den neuen Handoverbeziehungen ein Handover von der Funkzelle Z1 zu der Funkzelle Z4 möglich ist.

In Bezug auf die benachbarten Funkzellen Z2 und Z5 stellt die Managementeinrichtung EM1 fest, dass gemäß den Handoverbeziehungen der Managementeinrichtung EM1 ein Handover von der Funkzelle Z2 zu der Funkzelle Z5 möglich ist, während der umgekehrte Handover von der Funkzelle Z5 zu der Funkzelle Z2 gemäß den Handoverbeziehungen der Managementeinrichtung EM2 nicht durchführbar ist. Um dies zu beheben, sendet die Managementeinrichtung EM1 eine Nachricht notifyUniDirectionalHandover an die Managementeinrichtung EM2. Durch diese Nachricht notifyUniDirectionalHandover wird die Managementeinrichtung EM2 angewiesen, die von ihr gespeicherten Handoverbeziehung derart zu überarbeiten, dass gemäß den neuen Handoverbeziehungen ein Handover von der Funkzelle Z5 zu der Funkzelle Z2 möglich ist.

Vorzugsweise enthält die Nachricht notifyUniDirectionalHandover die folgenden Inhalte:
- objectClass: Die Objektklasse der Funkzelle Z2.
- objectInstance: die Objektinstanz der Funkzelle Z2. Diese Größe ist nur der Managementeinrichtung EM1, nicht aber der Managementeinrichtung EM2 bekannt. Sie ist in der Nachricht notifyUniDirectionalHandover dennoch enthalten, so dass der Managementeinrichtung EM1 bei einer späteren Betrachtung der Nachricht notifyUniDirectionalHandover die Identifizierung ihrer Funkzelle Z2 erleichtert wird.
- targetCell: Hierbei handelt es sich um eine Identifikationsgröße, welcher der Managementeinrichtung EM2 die Identifizierung der Funkzelle Z2 ermöglicht. Diese Größe wird auf Null gesetzt, wenn die Managementeinrichtung EM2 die Funkzelle Z2 nicht kennt, d.h. noch nicht als externes Objekt gespeichert hat.
- notificationId: Durch diese Größe wird die Nachricht notifyUniDirectionalHandover eindeutig identifiziert.
- eventTime: Hierbei handelt es sich um den Zeitpunkt, zu welchem die unidirektionale Handoverbeziehung entdeckt wurde.
- systemDN: Hierbei handelt es sich um eine Identifikationsgröße der Managementeinrichtung EM1.
- notificationType: Dies Größe gibt an, dass es sich bei der Nachricht um eine Nachricht des Typs notifyUniDirectionalHandover handelt.
- sourceCell: Hierbei handelt es sich um eine Identifikationsgröße, welcher der Managementeinrichtung EM2 die Identifizierung der Funkzelle Z5 ermöglicht.
- attributeListTargetCell: Hierbei handelt es sich um eine Sequenz von Attributen mit ihren jeweiligen Werten, welche die Funkzelle Z2 beschreiben. Diese Größe muss verwendet werden, wenn der Managementeinrichtung EM2 die Funkzelle Z2 nicht bekannt ist. Im vorliegenden Fall hat die Managementeinrichtung EM2 die Funkzelle Z2 jedoch bereits als externes Objekt gespeichert, so dass auf die Größe attributeListTargetCell verzichtet werden oder ihr Wert Null eingesetzt werden kann. Es kann jedoch auch in dem Fall, dass die Managementeinrichtung EM2 die Funkzelle Z2 bereits kennt, sinnvoll sein, mittels der Größe attributeListTargetCell Attributwerte der Funkzelle Z2 zu übermitteln, da auf diese Weise ein Datenabgleich zwischen dem externen Objekt der Managementeinrichtung EM2 und dem Master-Objekt der Managementeinrichtung EM1 erfolgen kann.

Nach Empfang der Nachricht notifyUniDirectionalHandover führt die Managementeinrichtung EM2 die Änderungen ihrer Handoverbeziehungen gemäß dem Inhalt der Nachricht notifyUniDirectionalHandover durch. Somit besteht nun eine bidirektionale Handoverbeziehung zwischen den Funkzellen Z2 und Z5. Alternativ zur Versendung der Nachricht notifyUniDirectionalHandover ist eS möglich, dass die Managementeinrichtung EM1 über die Peer-to-Peer-Schnittstelle P2P selber die erforderlichen Änderungen der Handoverbeziehungen der Managementeinrichtung EM2 durchführt.

Zusätzlich oder alternativ zur Durchführung des beschriebenen Verfahrens durch die Managementeinrichtung EM1 kann dies auch durch die Managementeinrichtung EM2 erfolgen. Hierbei ist es insbesondere möglich, dass jede Managementeinrichtung EM1 bzw. EM2 lediglich dafür zuständig ist, ihre eigenen Handoverbeziehungen zu überarbeiten. Hierdurch kann auf die Versendung der Nachricht notifyUniDirectionalHandover verzichtet werden.

Von besonderem Vorteil ist der Einsatz der Peer-to-Peer Schnittstelle P2P. Denn aufgrund der Verwendung dieser Art von Schnittstelle können die Managementeinrichtungen direkt auf die Datensätze der jeweiligen anderen Managementeinrichtung zugreifen. Dies ermöglicht ein dezentrales Auffinden von unerwünschten unidirektionalen Handoverbeziehungen.

## Patentansprüche

1. Verfahren zum Betreiben eines Managementsystems, bei welchem eine erste Managementeinrichtung (EM1)
• Informationen betreffend von der ersten Managementeinrichtung (EM1) überwachte Objekte (Z1, Z2, Z3), betreffend von einer zweiten Managementeinrichtung (EM2) überwachte Objekte (Z4, Z5), und betreffend Beziehungen zwischen von der ersten Managementeinrichtung (EM1) überwachten Objekten (Z1, Z2, Z3) und von der zweiten Managementeinrichtung (EM2) überwachten Objekten (Z4, Z5) speichert,
• von der zweiten Managementeinrichtung (EM2) gespeicherte Informationen betreffend von der ersten Managementeinrichtung (EM1) überwachte Objekte (Z1, Z2, Z3), betreffend von der zweiten Managementeinrichtung (EM2) überwachte Objekte (Z4, Z5), und betreffend Beziehungen zwischen von der ersten Managementeinrichtung (EM1) überwachten Objekten (Z1, Z2, Z3) und von der zweiten Managementeinrichtung (EM2) überwachten Objekten (Z4, Z5) abfragt,
• unter Verwendung der von der ersten Managementeinrichtung (EM1) gespeicherten und der von der zweiten Managementeinrichtung (EM2) abgefragten Informationen zumindest eine Beziehung zwischen zumindest einem von der ersten Managementeinrichtung (EM1) überwachten Objekt (Z1, Z2, Z3) und zumindest einem von der zweiten Managementeinrichtung (EM2) überwachten Objekt (Z4, Z5) ermittelt, welche entweder lediglich von der ersten Managementeinrichtung (EM1) oder lediglich von der zweiten Managementeinrichtung (EM2) gespeichert ist.

2. Verfahren nach Anspruch 1, bei dem
die erste Managementeinrichtung (EM1) in Bezug auf zumindest eine ermittelte Beziehung, welche lediglich von der zweiten Managementeinrichtung (EM2) gespeichert ist, Änderungen der von der ersten Managementeinrichtung (EM1) gespeicherten Informationen durchführt, so dass diese Beziehung auch von der ersten Managementeinrichtung (EM1) gespeichert ist.

3. Verfahren nach Anspruch 1 oder 2, bei dem
die erste Managementeinrichtung (EM1) eine Nachricht (notifyUniDirectionalHandover) zur Information über zumindest eine Beziehung, welche lediglich von der ersten Managementeinrichtung (EM1) gespeichert ist, an die zweite Managementeinrichtung (EM2) sendet.

4. Verfahren nach Anspruch 3, bei dem
die Nachricht (notifyUniDirectionalHandover) Identifikationsinformationen betreffend ein von der ersten Managementeinrichtung (EM1) überwachtes Objekt (Z1, Z2, Z3) und Identifikationsinformationen betreffend ein von der zweiten Managementeinrichtung (EM2) überwachtes Objekt (Z4, Z5) umfasst.

5. Verfahren nach Anspruch 3 oder 4, bei dem
die Nachricht (notifyUniDirectionalHandover) sich auf ein von der ersten Managementeinrichtung (EM1) überwachtes Objekt (Z1, Z2, Z3) bezieht, welches der zweiten Managementeinrichtung (EM2) unbekannt ist.

6. Verfahren nach einem der Ansprüche 3 bis 5, bei dem
die zweite Managementeinrichtung (EM2) eine Änderungen der von der zweiten Managementeinrichtung (EM2) gespeicherten Informationen durchführt, so dass diese Beziehung auch von der zweiten Managementeinrichtung (EM2) gespeichert ist.

7. Verfahren nach Anspruch 1 oder 2, bei dem
die erste Managementeinrichtung (EM1) in Bezug auf zumindest eine ermittelte Beziehung, welche lediglich von der ersten Managementeinrichtung (EM1) gespeichert ist, Änderungen der von der zweiten Managementeinrichtung (EM2) gespeicherten Informationen durchführt, so dass diese Beziehung auch von der zweiten Managementeinrichtung (EM2) gespeichert ist.

8. Verfahren nach einem der Ansprüche 1 bis 7, bei dem
die Kommunikation zwischen der ersten Managementeinrichtung (EM1) und der zweiten Managementeinrichtung (EM2) über eine Peer-to-Peer Schnittstelle (P2P) erfolgt.

9. Verfahren nach einem der Ansprüche 1 bis 8, bei dem
die von der ersten Managementeinrichtung (EM1) und von der zweiten Managementeinrichtung (EM2) gespeicherten Informationen betreffend überwachte Objekte (Z1, Z2, Z3, Z4, Z5) Werte von Attributen der jeweiligen Objekte (Z1, Z2, Z3, Z4, Z5) umfassen.

10. Verfahren nach einem der Ansprüche 1 bis 9, bei dem
es sich bei den Objekten (Z1, Z2, Z3, Z4, Z5) um Funkzellen eines Mobilfunkkommunikationssystems und bei den Beziehungen zwischen den Objekten (Z1, Z2, Z3, Z4, Z5) um Handover-Beziehungen handelt.

11. Verfahren nach einem der Ansprüche 1 bis 10, bei dem
es sich bei der ersten Managementeinrichtung (EM1) und der zweiten Managementeinrichtung (EM2) um gleichartige Managementeinrichtungen handelt.

12. Managementeinrichtung (EM1) mit
• Mitteln zum Speichern von Informationen betreffend von der Managementeinrichtung (EM1) überwachte Objekte (Z1, Z2, Z3), betreffend von einer zweiten Managementeinrichtung (EM2) überwachte Objekte (Z4, Z5), und betreffend Beziehungen zwischen von der Managementeinrichtung (EM1) überwachten Objekten (Z1, Z2, Z3) und von der zweiten Managementeinrichtung (EM2) überwachten Objekten (Z4, Z5),
• Mitteln zum Abfragen von von der zweiten Managementeinrichtung (EM2) gespeicherten Informationen betreffend von der Managementeinrichtung (EM1) überwachte Objekte (Z1, Z2, Z3), betreffend von der zweiten Managementeinrichtung (EM2) überwachte Objekte (Z4, Z5), und betreffend Beziehungen zwischen von der Managementeinrichtung (EM1) überwachten Objekten (Z1, Z2, Z3) und von der zweiten Managementeinrichtung (EM2) überwachten Objekten (Z4, Z5), und
• Mitteln zum Ermitteln unter Verwendung der von der Managementeinrichtung (EM1) gespeicherten und der von der zweiten Managementeinrichtung (EM2) abgefragten Informationen von zumindest einer Beziehung zwischen zumindest einem von der (EM1) Managementeinrichtung überwachten Objekt (Z1, Z2, Z3) und zumindest einem von der zweiten Managementeinrichtung (EM2) überwachten Objekt (Z4, Z5), welche entweder lediglich von der (EM1) Managementeinrichtung oder lediglich von der zweiten Managementeinrichtung (EM2) gespeichert ist.

13. Managementsystem umfassend eine erste Managementeinrichtung (EM1) und eine zweite Managementeinrichtung (EM2), sowie von der ersten Managementeinrichtung (EM1) überwachte Objekte (Z1, Z2, Z3) und von der zweiten Managementeinrichtung (EM2) überwachte Objekte, (Z4, Z5), mit
• Mitteln der ersten Managementeinrichtung (EM1) zum Speichern von Informationen betreffend von der ersten Managementeinrichtung (EM1) überwachte Objekte (Z1, Z2, Z3), betreffend von der zweiten Managementeinrichtung (EM2) überwachte Objekte (Z4, Z5), und betreffend Beziehungen zwischen von der ersten Managementeinrichtung (EM1) überwachten Objekten (Z1, Z2, Z3) und von der zweiten Managementeinrichtung (EM2) überwachten Objekten (Z4, Z5),
• Mitteln der zweiten Managementeinrichtung (EM2) zum Speichern von Informationen betreffend von der ersten Managementeinrichtung (EM1) überwachte Objekte (Z1, Z2, Z3), betreffend von der zweiten Managementeinrichtung (EM2) überwachte Objekte (Z4, Z5), und betreffend Beziehungen zwischen von der ersten Managementeinrichtung (EM1) überwachten Objekten (Z1, Z2, Z3) und von der zweiten Managementeinrichtung (EM2) überwachten Objekten (Z4, Z5),
• Mitteln der ersten Managementeinrichtung (EM1) zum Abfragen von von der zweiten Managementeinrichtung (EM2) gespeicherten Informationen betreffend von der ersten Managementeinrichtung (EM1) überwachte Objekte (Z1, Z2, Z3), betreffend von der zweiten Managementeinrichtung (EM2) überwachte Objekte (Z4, Z5), und betreffend Beziehungen zwischen von der ersten Managementeinrichtung (EM1) überwachten Objekten (Z1, Z2, Z3) und von der zweiten Managementeinrichtung (EM2) überwachten Objekten (Z4, Z5),
• Mitteln der ersten Managementeinrichtung (EM1) zum Ermitteln unter Verwendung der von der ersten Managementeinrichtung (EM1) gespeicherten und der von der zweiten Managementeinrichtung (EM2) abgefragten Informationen von zumindest einer Beziehung zwischen zumindest einem von der ersten Managementeinrichtung (EM1) überwachten Objekt (Z1, Z2, Z3) und zumindest einem von der zweiten Managementeinrichtung (EM2) überwachten Objekt (Z4, Z5), welche entweder lediglich von der ersten Managementeinrichtung (EM1) oder lediglich von der zweiten Managementeinrichtung (EM2) gespeichert ist.

## Claims

1. Method for operating a management system, in which a first management device (EM1)
• stores information relating to objects (Z1, Z2, Z3) monitored by the first management device (EM1), relating to objects (Z4, Z5) monitored by a second management device (EM2), and relating to relationships between objects (Z1 Z2, Z3) monitored by the first management device (EM1) and objects (Z4, Z5) monitored by the second management device (EM2),
• requests information stored by the second management device (EM2) relating to objects (Z1, Z2, Z3) monitored by the first management device (EM1), relating to objects (Z4, Z5) monitored by the second management device (EM2), and relating to relationships between objects (Z1, Z2, Z3) monitored by the first management device (EM1) and objects (Z4, Z5) monitored by the second management device (EM2),
• uses the information stored by the first management device (EM1) and the information requested from the second management device (EM2) to ascertain at least one relationship between at least one object (Z1 Z2, Z3) monitored by the first management device (EM1) and at least one object (Z4, Z5) monitored by the second management device (EM2), said relationship being stored either only by the first management device (EM1) or only by the second management device (EM2).

2. Method according to Claim 1, in which
the first management device (EM1) makes changes to the information stored by the first management device (EM1) in respect of at least one ascertained relationship which is stored only by the second management device (EM2), so that this relationship is also stored by the first management device (EM1).

3. Method according to Claim 1 or 2, in which
the first management device (EM1) sends a message (notifyUniDirectionalHandover) concerning information about at least one relationship which is stored only by the first management device (EM1) to the second management device (EM2).

4. Method according to Claim 3, in which
the message (notifyUniDirectionalHandover) comprises identification information relating to an object (Z1, Z2, Z3) monitored by the first management device (EM1) and identification information relating to an object (Z4, Z5) monitored by the second management device (EM2).

5. Method according to Claim 3 or 4, in which
the message (notifyUniDirectionalHandover) relates to an object (Z1, Z2, Z3) which is monitored by the first management device (EM1) and which is unknown to the second management device (EM2).

6. Method according to one of Claims 3 to 5, in which
the second management device (EM2) makes a change to the information stored by the second management device (EM2), so that this relationship is also stored by the second management device (EM2).

7. Method according to Claim 1 or 2, in which
the first management device (EM1) makes changes to the information stored by the second management device (EM2) in respect of at least one ascertained relationship which is stored only by the first management device (EM1), so that this relationship is also stored by the second management device (EM2).

8. Method according to one of Claims 1 to 7, in which
the communication between the first management device (EM1) and the second management device (EM2) takes place via a peer-to-peer interface (P2P).

9. Method according to one of Claims 1 to 8, in which
the information which the first management device (EM1) and the second management device (EM2) store relating to monitored objects (Z1, Z2, Z3, Z4, Z5) comprises values for attributes of the respective objects (Z1, Z2, Z3, Z4, z5).

10. Method according to one of Claim 1 to 9, in which
the objects (Z1, Z2, Z3, Z4, Z5) are radio cells in a mobile radio communication system and the relationships between the objects (Z1, Z2, Z3, Z4, Z5) are handover relationships.

11. Method according to one of Claims 1 to 10, in which
the first management device (EM1) and the second management device (EM2) are homogeneous management devices.

12. Management device (EM1) having
• means for storing information relating to objects (Z1, Z2, Z3) monitored by the management device (EM1), relating to objects (Z4, Z5) monitored by a second management device (EM2), and relating to relationships between objects (Z1, Z2, Z3) monitored by the management device (EM1) and objects (Z4, Z5) monitored by the second management device (EM2),
• means for requesting information stored by the second management device (EM2) relating to objects (Z1, Z2, Z3) monitored by the management device (EM1), relating to objects (Z4, Z5) monitored by the second management device (EM2), and relating to relationships between objects (Z1, Z2, Z3) monitored by the management device (EM1) and objects (Z4, Z5) monitored by the second management device (EM2), and
• means for using the information stored by the management device (EM1) and the information requested from the second management device (EM2) to ascertain at least one relationship between at least one object (Z1, Z2, Z3) monitored by the (EM1) management device and at least one object (Z4, Z5) monitored by the second management device (EM2), said relationship being stored either only by the (EM1) management device or only by the second management device (EM2).

13. Management system comprising a first management device (EM1) and a second management device (EM2), and also objects (Z1, Z2, Z3) monitored by the first management device (EM1) and objects (Z4, Z5) monitored by the second management device (EM2), having
• means in the first management device (EM1) for storing information relating to objects (Z1, Z2, Z3) monitored by the first management device (EM1), relating to objects (Z4, Z5) monitored by the second management device (EM2), and relating to relationships between objects (Z1, Z2, Z3) monitored by the first management device (EM1) and objects (Z4, Z5) monitored by the second management device (EM2),
• means in the second management device (EM2) for storing information relating to objects (Z1, Z2, Z3) monitored by the first management device (EM1), relating to objects (Z4, Z5) monitored by the second management device (EM2), and relating to relationships between objects (Z1, Z2, Z3) monitored by the first management device (EM1) and objects (Z4, Z5) monitored by the second management device (EM2),
• means in the first management device (EM1) for requesting information stored by the second management device (EM2) relating to objects (Z1, Z2, Z3) monitored by the first management device (EM1), relating to objects (Z4, Z5) monitored by the second management device (EM2), and relating to relationships between objects (Z1, Z2, Z3) monitored by the first management device (EM1) and objects (Z4, Z5) monitored by the second management device (EM2),
• means in the first management device (EM1) for using the information stored by the first management device (EM1) and the information requested from the second management device (EM2) to ascertain at least one relationship between at least one object (Z1, Z2, Z3) monitored by the first management device (EM1) and at least one object (Z4, Z5) monitored by the second management device (EM2), said relationship being stored either only by the first management device (EM1) or only by the second management device (EM2).

## Revendications

1. Procédé pour l'exploitation d'un système de gestion, dans lequel un premier dispositif de gestion (EM1)
- stocke des informations concernant des objets (Z1, Z2, Z3) contrôlés par le premier dispositif de gestion (EM1) concernant des objets (Z4, Z5) contrôlés par un second dispositif de gestion (EM2), et concernant des relations entre des objets (Z1, Z2, Z3) contrôlés par le premier dispositif de gestion (EM1) et des objets (Z4, Z5) contrôlés par le seconde dispositif de gestion (EM2),
- interroge des informations stockées par le second dispositif de gestion (EM2) concernant des objets (Z1, Z2, Z3) contrôlés par le premier dispositif de gestion (EM1), concernant des objets (Z4, Z5) contrôlés par le second dispositif de gestion (EM2) et concernant des relations entre des objets (Z1, Z2, Z3) contrôlés par le premier dispositif de gestion (EM1) et des objets (Z4, Z5) contrôlés par le second dispositif de gestion (EM2),
- détermine en utilisant les informations stockées par le premier dispositif de gestion (EM1) et interrogées par le second dispositif de gestion (EM2) au moins une relation entre au moins un objet (Z1, Z2, Z3) contrôlé par le premier dispositif de gestion (EM1) et au moins un objet (Z4, Z5) contrôlé par le second dispositif de gestion (EM2), laquelle est stockée soit uniquement par le premier dispositif de gestion (EM1) soit uniquement par le second dispositif de gestion (EM2).

2. Procédé selon la revendication 1, dans lequel
le premier dispositif de gestion (EM1) effectue, par rapport à au moins une relation déterminée, qui est stockée uniquement par le second dispositif de gestion (EM2), des modifications des informations stockées par le premier dispositif de gestion (EM1), de sorte que cette relation est stockée également par le premier dispositif de gestion (EM1).

3. Procédé selon la revendication 1 ou 2, dans lequel le premier dispositif de gestion (EM1) envoie un message (notifyUniDirectionnalHandover) pour l'information sur au moins une relation, qui est stockée uniquement par le premier dispositif de gestion (EM1), au second dispositif de gestion (EM2).

4. Procédé selon la revendication 3, dans lequel le message (notifyUniDirectionnalHandover) comprend des informations d'identification concernant un objet (Z1 Z2, Z3) contrôlé par le premier dispositif de gestion (EM1) et des informations d'identification concernant un objet (Z4, Z5) contrôlé par le second dispositif de gestion (EM2).

5. Procédé selon la revendication 3 ou 4, dans lequel le message (notifyUniDirectionnalHandover) se rapporte à un objet (Z1 Z2, Z3) contrôlé par le premier dispositif de gestion (EM1), lequel n'est pas connu du second dispositif de gestion (EM2).

6. Procédé selon l'une quelconque des revendications 3 à 5, dans lequel le second dispositif de gestion (EM2) effectue une modification des informations stockées par le second dispositif de gestion (EM2), de sorte que cette relation est stockée également par le second dispositif de gestion (EM2).

7. Procédé selon la revendication 1 ou 2, dans lequel le premier dispositif de gestion (EM1) effectue par rapport à au moins une relation déterminée, qui est stockée uniquement par le premier dispositif de gestion (EM1), des modifications des informations stockées par le second dispositif de gestion (EM2), de sorte que cette relation est stockée également par le second dispositif de gestion (EM2).

8. Procédé selon l'une quelconque des revendications 1 à 7, dans lequel la communication entre le premier dispositif de gestion (EM1) et le second dispositif de gestion (EM2) s'effectue au moyen d'une interface Peer-to-Peer (P2P).

9. Procédé selon l'une quelconque des revendications 1 à 8, dans lequel les informations stockées par le premier dispositif de gestion (EM1) et par le second dispositif de gestion (EM2) concernant des objets (Z1, Z2, Z3, Z4, Z5) comprennent des valeurs d'attribut des objets (Z1, Z2, Z3, Z4, Z5) respectifs.

10. Procédé selon l'une quelconque des revendications 1 à 9, dans lequel, en ce qui concerne les objets (Z1, Z2, Z3, Z4, Z5), il s'agit de cellules radio d'un système de communication de téléphonie mobile, et en ce qui concerne les relations entre les objets (Z1, Z2, Z3, Z4, Z5), il s'agit de relations Handover.

11. Procédé selon l'une quelconque des revendications 1 à 10, dans lequel, en ce qui concerne le premier dispositif de gestion (EM1) et le second dispositif de gestion (EM2), il s'agit de dispositifs de gestion similaires.

12. Dispositif de gestion (EM1) comprenant
- des moyens pour le stockage d'informations concernant des objets (Z1, Z2, Z3) contrôlés par le dispositif de gestion (EM1), concernant des objets (Z4, Z5) contrôlés par le second dispositif de gestion (EM2), et concernant des relations entre des objets (Z1, Z2, Z3) contrôlés par le dispositif de gestion (EM1) et des objets (Z4, Z5) contrôlés par le second dispositif de gestion (EM2),
- des moyens pour l'interrogation d'informations stockées par le second dispositif de gestion (EM2) concernant des objets (Z1, Z2, Z3) contrôlés par le dispositif de gestion (EM1), concernant des objets (Z4, Z5) contrôlés par le second dispositif de gestion (EM2), et concernant des relations entre des objets (Z1, Z2, Z3) contrôlés par le dispositif de gestion (EM1) et des objets (Z4, Z5) contrôlés par le second dispositif de gestion (EM2),
- des moyens pour déterminer, en utilisant les informations stockées par le dispositif de gestion (EM1) et interrogées par le second dispositif de gestion (EM2), au moins une relation entre au moins un objet (Z1, Z2, Z3) contrôlé par le dispositif de gestion (EM1) et au moins un objet (Z4, Z5) contrôlé par le second dispositif de gestion (EM2), laquelle est stockée soit uniquement par le dispositif de gestion (EM1) soit uniquement par le second dispositif de gestion (EM2).

13. Système de gestion comprenant un premier dispositif de gestion (EM1) et un second dispositif de gestion (EM2), ainsi que des objets (Z1, Z2, Z3) contrôlés par le premier dispositif de gestion (EM1) et des objets (Z4, Z5) contrôlés par le second dispositif de gestion (EM2), comprenant
- des moyens du premier dispositif de gestion (EM1) pour le stockage d'informations concernant des objets (Z1, Z2, Z3) contrôlés par le premier dispositif de gestion (EM1), concernant des objets (Z4, Z5) contrôlés par le second dispositif de gestion (EM2), et concernant des relations entre des objets (Z1, Z2, Z3) contrôlés par le premier dispositif de gestion (EM1) et des objets (Z4, Z5) contrôlés par le second dispositif de gestion (EM2),
- des moyens du second dispositif de gestion (EM2) pour le stockage d'informations concernant des objets (Z1, Z2, Z3) contrôlés par le premier dispositif de gestion (EM1), concernant des objets (Z4, Z5) contrôlés par le second dispositif de gestion (EM2), et concernant des relations entre des objets (Z1, Z2, Z3) contrôlés par le premier dispositif de gestion (EM1) et des objets (Z4, Z5) contrôlés par le second dispositif de gestion (EM2),
- des moyens du premier dispositif de gestion (EM1) pour l'interrogation d'informations stockées par le second dispositif de gestion (EM2) concernant des objets (Z1, Z2, Z3) contrôlés par le premier dispositif de gestion (EM1), concernant des objets (Z4, Z5) contrôlés par le second dispositif de gestion (EM2) et concernant des relations entre des objets (Z1, Z2, Z3) contrôlés par le premier dispositif de gestion (EM1) et des objets (Z4, Z5) contrôlés par le second dispositif de gestion (EM2),
- des moyens du premier dispositif de gestion (EM1) pour déterminer en utilisant les informations stockées par le premier dispositif de gestion (EM1) et interrogées par le second dispositif de gestion (EM2), au moins une relation entre au moins un objet (Z1, Z2, Z3) contrôlé par le premier dispositif de gestion (EM1) et au moins un objet (Z4, Z5) contrôlé par le second dispositif de gestion (EM2), laquelle est stockée soit uniquement par le premier dispositif de gestion (EM1) soit uniquement par le second dispositif de gestion (EM2).
